# EUROPÄISCHE PATENTANMELDUNG

(11) **EP 1 073 240 A2**
(43) Veröffentlichungstag der Anmeldung: **31.01.2001**
(21) Anmeldenummer: 00116034.0
(22) Anmeldetag: 26.07.2000
(51) Int. Cl.: H04L 25/14, H04J 3/06, H04Q 11/04

(54) **Laufzeitausgleich für einen Invers-Multiplexer**

(30) Priorität: 28.07.1999 DE 19935437
(71) Anmelder: SIEMENS AKTIENGESELLSCHAFT, 80333 München (DE)
(72) Erfinder: Plank, Stefan, 83435 Bad Reichenhall (DE)

(57) **Zusammenfassung**

Bei der Bündelung von zwei B-Kanälen des ISDN-Standards zu einem Nutzkanal mit einer effektiven Datenrate von 128 KBit/s muß empfängerseitig der Laufzeitunterschied, der sich beim Durchschleusen der beiden Kanäle durch ein Netz ergeben kann, ausgeglichen werden. Es wird vorgeschlagen, das Eintreffen des ersten 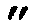 schnelleren" B-Kanals empfängerseitig zu erfassen und die Nutzdaten des 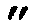 schnelleren" B-Kanals in eine FIFO-Speicher (2) einzuschreiben. Die Nutzdaten des 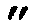 schnelleren" B-Kanals werden aus dem FIFO-Speicher (2) wieder ausgelesen (6), sobald das Startzeichen des 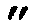 langsameren" B-Kanals empfängerseitig eintrifft. Die Nutzdaten des weiteren Pfads können dann unverzögert weitergeleitet werden (9).

Mittels einer kurzen Präambel bestehend aus einem Ruhe- und einem Startzeichen in jedem B-Kanal kann über zwei Zähler (3, 4) die Speichertiefe des FIFO-Speichers (2) gesetzt werden, da es die Laufzeitunterschiede der Daten zwischen den beiden B-Kanälen im Empfänger wieder ausgleicht.

## Beschreibung

Die vorliegende Erfindung bezieht sich auf ein Verfahren zum Laufzeitausgleich beim Empfang von Daten, die auf mehreren Pfaden in einer Multiplex-Technik übertragen werden sowie auf ein ISDN-Übertragungssystem, das zur Bündelung der beiden B-Kanäle des ISDN-Standards zu einem einzigen effektiven Nutzkanal konfiguriert ist.

Gemäß dem ISDN-Standard (Basisanschluß) sind zwei digitale Basiskanäle (B-Kanäle) für Nutzdaten vorgesehen, die eine Übertragungsrate von je 64 kBit/s ermöglichen. Darüber hinaus ist ein Steuerkanal (D-Kanal) mit 16 kBit/s vorgesehen. Zur Schaffung eines Nutzkanals mit einer effektiven Übertragungsrate von 128 kBit/s (netto) über ISDN ist es bekannt, die beiden B-Kanäle zu einer einzigen Verbindung zu bündeln.

Aus dem Stand der Technik ist es bekannt, diese Bündelung durch eine Software-/Hardwarelösung mit Protokoll gemäß einer TIA-Norm-Umsetzung oder einem CAPI-Protokoll umzusetzen. Dabei besteht das Problem, daß ein zusätzliches Protokoll sowie ein hoher Schaltungsaufwand erforderlich sind.

Dabei ist zu bedenken, daß bei dem Durchschleusen von zwei unterschiedlichen Kanälen durch das Netz Laufzeitunterschiede zwischen den beiden B-Kanälen auftreten können. Diese Laufzeitunterschiede müssen natürlich empfängerseitig vor dem Demultiplexen der beiden B-Kanäle kompensiert werden. Gemäß dem Stand der Technik erfolgt dabei die Laufzeitkompensierung durch ein Ausmessen der Laufzeitunterschiede gemäß einem verhältnismäßig komplizierten Protokoll. Ein zusätzliches Protokoll, wie es beispielsweise bei dem CAPI-Protokoll der Fall ist, schmälert indessen die effektive Bandbreite der Übertragung.

Der womöglich unterschiedliche Zeitpunkt des Aufbaus der beiden B-Kanäle stellt dagegen normalerweise kein Problem dar, wenn gewartet wird, bis sicher bei de B-Kanäle aufgebaut sind.

Es ist daher Aufgabe der vorliegenden Erfindung, eine Technik bereitzustellen, die die Kompensation von Laufzeitunterschieden bei einer Datenübertragung über zwei Kanäle, wie beispielsweise den beiden B-Kanälen des ISDN-Basisanschlusses in einfacherer Weise ermöglicht. Zum Ausmessen der Laufzeitunterschiede sowie zum darauffolgenden Übertragungsbetrieb sollte keine zusätzliche Software notwendig sein.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Erfindungsgemäß ist also ein Verfahren zum Laufzeitausgleich beim Empfang von Daten vorgesehen, die auf mehreren Pfaden in einer Multiplex-Technik übertragen werden. In jedem Pfad wird vor den eigentlichen Nutzdaten ein Startzeichen übertragen. Die Nutzdaten eines ersten Pfads, dessen Startzeichen zeitlich als erstes empfangen wird, werden in ein FIFO-Speicher eingeschrieben. Das Auslesen der Nutzdaten des ersten Pfads aus dem FIFO-Speicher wird gestartet, sobald das Startzeichen eines weiteren Pfads empfangen wurde. Die Nutzdaten des weiteren Pfads, dessen Startzeichen zeitlich nach dem Startzeichen des ersten Pfads empfangen wurde, werden unverzögert weitergeleitet.

Die Startzeichen stellen eine Art Präambel vor den eigentlichen Nutzdaten dar, die die Speichertiefe des FIFO-Speicher so einstellt, daß der Laufzeitunterschied der Daten zwischen den mehreren Pfaden empfängerseitig wieder ausgeglichen wird.

Die Startzeichen der mehreren Pfade (Kanäle) können jeweils eine Ordnungsnummer enthalten, die die Reihenfolge der Nutzdaten der mehreren Pfade für ein späteres Demultiplexen anweist.

Das Verfahren kann weiterhin den Schritt des Demultiplexens der Nutzdaten des ersten und des weiteren Pfads aufweisen.

Vor der Übertragung der Startzeichen kann jeweils solange ein Ruhezeichen übertragen werden, bis sichergestellt ist, daß die Verbindung in sämtlichen Pfaden zwischen dem Sender und dem Empfänger hergestellt wurde. Das Ruhezeichen kann zusammen mit dem Startzeichen der Präambel vor den eigentlichen Nutzdaten zugerechnet werden.

Das obengenannte Verfahren zum Laufzeitausgleich kann abgebrochen werden, sobald ein Überlauf des FIFO-Speichers festgestellt wird. Dies kann beispielsweise dadurch verursacht werden, daß eines der Startzeichen bei der Übertragung nicht korrekt übermittelt wurde.

Das Verfahren eignet sich insbesondere für die Übertragung von Daten auf den beiden B-Kanälen des ISDN-Standards (Basisanschluß), die zu einem Nutzkanal mit einer effektiven Übertragungsrate von 128 kBit/s gebündelt sind.

Erfindungsgemäß ist weiterhin ein ISDN-Übertragungssystem vorgesehen, das zur Bündelung der beiden B-Kanäle zu einem effektiven Nutzkanal mit 128 kBit/s konfiguriert ist. Das ISDN-Übertragungssystem weist einen Sender auf, der in jedem der B-Kanäle vor der Übertragung der Nutzdaten ein Startzeichen aussendet, und einen Empfänger, der für einen Laufzeitausgleich eine Steuereinheit und ein FIFO-Speicher aufweist. Die Steuereinheit ist dabei derart ausgelegt, daß die Nutzdaten des B-Kanals, dessen Startzeichen zeitlich als erstes empfangen wird, in das FIFO-Speicher eingeschrieben werden, das Auslesen der Nutzdaten dieses B-Kanals aus dem FIFO-Speicher gestartet wird, sobald das Startzeichen des anderen zeitlich folgenden B-Kanals empfangen wurde und die Nutzdaten des anderen B-Kanals unverzögert weitergeleitet werden.

Das ISDN-Übertragungssystem kann empfängerseitig insbesondere einen ersten und einen zweiten Zähler aufweisen, die durch die Steuereinheit zum Zeitpunkt des Empfangs des zeitlich ersten Startzeichens bzw. des Startzeichens des zeitlich folgenden B-Kanals gestartet werden. Der erste und der zweite Zähler steuern dabei eine Schreibzeigereinheit bzw. eine Lesezeigereinheit des FIFO-Speichers. Somit setzen die Startzeichen über die beiden Zähler die Speichertiefe des FIFO-Speichers, um den Laufzeitunterschied der Daten zwischen den beiden B-Kanälen empfängerseitig wieder auszugleichen.

Die Startzeichen können jeweils eine Ordnungsnummer enthalten. Wenn die beiden B-Kanäle nach dem Laufzeitausgleich einen Demultiplexer zugeführt werden, wird die Ordnungsnummer der beiden B-Kanäle beachtet.

Weitere Merkmale, Eigenschaften und Vorteile der vorliegenden Erfindung werden im folgenden bezugnehmend auf die Figuren der begleitenden Zeichnungen sowie anhand eines Ausführungsbeispiels näher erläutert.
Figur 1 zeigt einen Sender eines erfindungsgemäßen ISDN-Übertragungssystems,
Figur 2 zeigt einen Empfänger eines erfindungsgemäßen ISDN-Übertragungssystems,
Figur 3 zeigt eine Registerkonfigurierung, wie sie bei der vorliegenden Erfindung verwendet werden kann,
Figur 4 zeigt die Erfassung eines Laufzeitunterschieds mittels Zählern, und
Figur 5 zeigt die Signale der Taktzentrale für eine Ersatzwegschaltung über ISDN.

Wie bereits eingangs gesagt, ist eine bevorzugte Anwendung der vorliegenden Erfindung die Übertragung von Daten auf den beiden B-Kanälen des ISDN-Standards (Basisanschluß), wobei die beiden B-Kanäle zu einem effektiven Nutzkanal mit 128 kBit/s gebündelt sind.

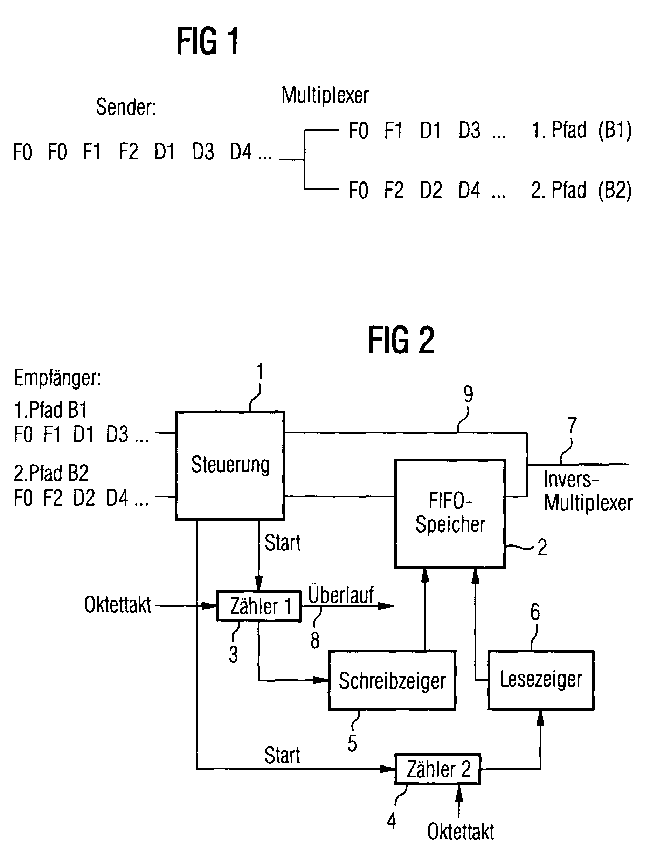

Figur 1 zeigt einen Sender, der zu einem solchen Anwendungsfall konfiguriert ist. Die durch den Sender an einen Empfänger zu übertragenden Daten bestehen in der Oktettfolge F0, F0, F1, F2, D1, D2, D3, D4, ... Wie später noch im Detail erläutert werden wird, stellen die Oktette F0 ein Ruhezeichen dar. Die Oktette F1 und F2 stellen Startzeichen dar. Die Ruhezeichen bilden zusammen mit den Startzeichen eine Präambel.

Die Oktette D1, D2, ... stellen die Oktette der eigentlichen Nutzdaten dar. Wie in Figur 1 ersichtlich werden senderseitig diese Datenfolge auf die beiden B-Kanäle (B1, B2) gemultiplext, so daß in einem ersten Pfad (erster B-Kanal) die Datenfolge F0, F1, D1, D3, ... übertragen wird und auf dem zweiten Pfad (zweitem B-Kanal) die Datenfolge F0, F2, D2, D4, ... übertragen wird.

Empfängerseitig müssen die Daten dieser beiden Kanäle in einem Demultiplex-Vorgang wieder zusammengeführt werden. Dazu muß sichergestellt sein, daß Zufuhr etwaiger Laufzeitunterschiede, wie sie bei dem Durchschleusen von verschiedenen Kanälen durch ein Netz entstehen können, kompensiert sind, so daß die Daten in dem Demultiplex-Vorgang wieder korrekt zusammengeführt werden.

Figur 2 zeigt einen Empfänger gemäß der vorliegenden Erfindung, der insbesondere in einem ISDN-Übertragungssystem vorgesehen sein kann und einen vorteilhaften Laufzeitausgleich bietet. Wie in Figur 2 ersichtlich ist eine Steuereinheit 1 vorgesehen, die die Daten des ersten und des zweiten B-Kanals und genauer gesagt die Steuerdaten in Form der Ruhe- bzw. Startoktette F0, F1, F2 auswertet. Die Steuereinheit 1 ermittelt, welches der beiden Startzeichen F1, F2 folgend auf die Ruhezeichen F0 als erstes empfängerseitig eintrifft. Die auf dieses als erstes eintreffende Steuerzeichen folgenden Nutzdaten werden in ein FIFO-Speicher 2 eingeschrieben. Kurz gesagt erfolgt das Auslesen der Daten aus dem FIFO-Speicher 2, sobald auch das Startzeichen F1 bzw. F2 des verzögerten B-Kanals durch die Steuereinheit 1 erfaßt wird. Die Nutzdaten des verzögerten, 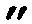 langsameren" B-Kanals werden unverzögert 9 einem Invers-Multiplexer 7 zugeführt.

Falls an einem Überlauf-Erfassungsausgang 8 des FIFO-Speichers 2 ein Übenauf des FIFO-Speichers 2 erfaßt wird, wird der Laufzeitausgleichs-Vorgang abgebrochen. Dies kann beispielsweise dadurch verursacht sein, daß eines der beiden Startzeichen bei der Übertragung beschädigt oder verlorengegangen ist und daher die Steuereinheit 1 nie den Auslesevorgang der Nutzdaten des zuerst eintreffenden B-Kanals aus dem FIFO-Speicher 2 initiieren wird.

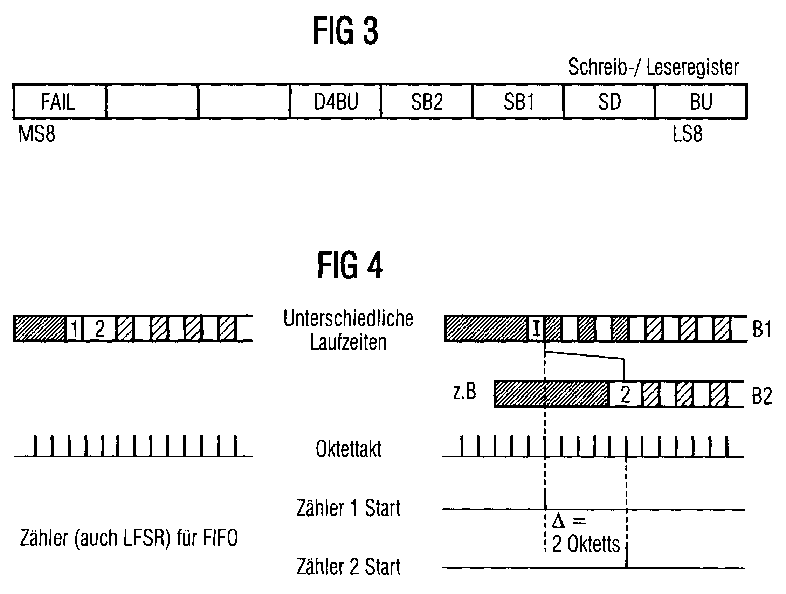

Genauer gesagt und wie in Figur 4 dargestellt ist, gibt die Steuereinheit 1 beim Erfassen des ersten der beiden Steuerzeichen F1 bzw. F2 ein Startsignal an einen ersten Zähler 3, der eine Schreibzeigereinheit 5 für den FIFO-Speicher 2 ansteuert. Beim Erfassen des zeitlich verzögerten zweiten Steuerzeichens F1 bzw. F2 gibt die Steuereinheit 1 ein Startsignal an einen zweiten Zähler 4, der eine Lesezeigereinheit 6 für das FIFO-Speicher 2 ansteuert. Die Zähler werden dabei jeweils mit dem Oktetttakt des Systems getaktet.

Ausgehend von dieser Erläuterung des konstruktiven Aufbaus sollen nunmehr der Ablauf zur Laufzeitkompensation für den Invers-Multiplexvorgang der beiden B-Kanäle erläutert werden:

Nachdem die Software die beiden B-Kanäle aufgebaut hat, wird die Übertragungsstrecke durch ein Bit im digitalen Teilnehmermultiplexsystem (DLC, Digital Loop Carrier System) freigegeben. Während einer Karenzzeit wird ein Ruhezeichen wie beispielsweise F0hex durch den Sender übertragen. Dieser Karenzzeit ist notwendig zur Sicherstellung, daß die beiden B-Kanäle tatsächlich bereit sind. In zwei aufeinanderfolgenden Oktetten werden dann die Werte F1hex und F2hex, die Startzeichen darstellen, vor der eigentlichen Übertragung der Nutzdaten (D1, D2, ...) übertragen. Die Startzeichen F1hex und F2hex dienen zur Bestimmung und Kompensation des Laufzeitunterschieds zwischen den beiden Kanälen im Empfänger. Der Empfänger wartet auf F1hex oder F2hex. Der Kanal, dessen Startzeichen zuerst eintrifft, muß bis zum Eintreffen des jeweils anderen Startzeichens verzögert werden. Für die Verzögerung wird das FIFO-Speicher 2 mit einem externen RAM verwendet. Dieses FIFO-Speicher 2 ist ringmäßig aufgebaut, das heißt der erste Zähler 3 steuert das Schreiben auf eine Adresse mittels des Schreibzeigers 5 und der zweite Zähler 4 steuert das Auslesen mittels des Lesezeigers 6. Der zweite Zähler 4 kann beispielsweise sechs Schritte hinter dem ersten Zähler 3 hängen, falls der Laufzeitunterschied gerade sechs Schritten entspricht. Dadurch, daß die Zähler 3 bzw. 4 durch die Steuereinheit 1 beim Eintreffen des ersten bzw. zweiten Startzeichens gestartet werden, wird die Kompensationsdifferenz automatisch eingestellt.

Da nur der zuerst eintreffende Pfad (B-Kanal) verzögert werden muß, kann der langsamere unbehandelt weitergereicht werden. Der verzögerte Pfad kann zeitlich unkritisch durch einen Invers-Multiplexer 7 in den Datenstrom eingeschleust werden.

Die zu diesem Ablauf notwendige Steuerung beschränkt sich auf ein Minimum, da alles hardwaremäßig ausgeführt wird. Dabei ist zu bedenken, daß das ISDN-Übertragungssystem eine gesicherte Übertragung ist, so daß komplizierte Protokolle für den Ausmeßvorgang der Laufzeitunterschiede entfallen können. Ein weiterer Vorteil ist, daß prinzipiell keine Software für den Invers-Multiplexer notwendig ist. Das Initiieren geschieht automatisch durch die BackUp-ISDN-Software.

Die Übertragung der Präambel in Form des Ruhe- und Startzeichens (F0hex bzw. F1hex, F2hex) erfolgt ohne Quittierung. Daher muß sichergestellt sein, daß die Startzeichen erst dann ausgesendet werden, wenn Sender und Empfänger gleichermaßen beide B-Kanäle angeschaltet haben. Dieses stellt die BackUp-ISDN-Software fest und gibt dem Multiplexer des Senders ein Trägersignal zum Aussenden der Steuerzeichen bzw. dem Start der Datenübertragung.

Sollte durch einen Fehlerfall eines der Startzeichen verlorengehen, so kann dies der Invers-Multiplexer 7 durch das Überlaufen des ersten Zählers 4 noch vor dem Start des zweiten Zählers 4 feststellen. Der BackUp-ISDN-Software kann dann über ein Status-Bit das Scheitern und der notwendige Abbruch der Ausmeßphase des Laufzeitunterschieds angezeigt werden.

Kann kein zweiter B-Kanal zugeschaltet werden (z. B. Besetzt-Fall), so ist ersatzweise auch eine Übertragung mit nur einem B-Kanal möglich.

Figur 3 zeigt einen Vorschlag für die Registerkonfigurierung.

Die Bits dieses Oktetts haben dabei folgende Bedeutung:
Bit 0 BU (Back Up) Mit diesem Bit werden die B-Kanäle angeschaltet und die Ruhezeichen (F0hex) ausgesendet.
Bit 1 SD (Send Data) Dieses Bit folgt nach einer Karenzzeit dem BU-Bit und startet die Datenübertragung mit dem Startzeichen.
Bit 2 SB1 (Select B1)

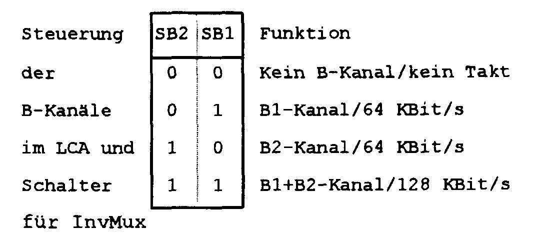

Bit 4 D4BU (Disable for Back Up) Dieses Bit kann zu Steuerungszwecken (z.B. DEE-Signalisierung) während des ISDN-Aufbaus ververwendet werden.
Bit 7 FAIL (Setup InvMux Fail) *(nur lesbar)* Statusbit, das das Scheitern der Ausmeßphase anzeigt.

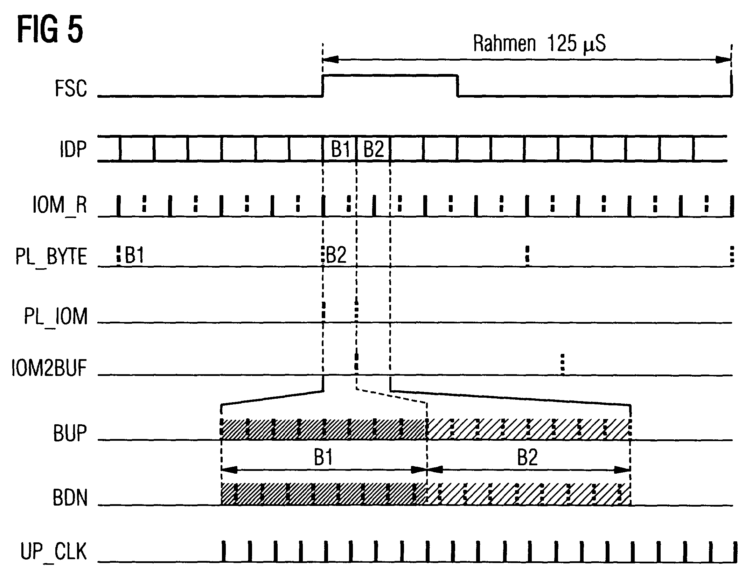

Figur 5 zeigt die Signale der Taktzentrale für den Ersatzweg über ISDN.

Die Abkürzungen haben dabei folgende Bedeutung:

| | | |
|---|---|---|
| FSC | 8 kHz | Rahmentakt |
| IDP | | Daten (Channel 0/1/2) |
| IOM_R | 64/128 kHz | Bittakt (äquidistant) |
| BY4IOM | 8/16 kHz | Oktettakt der B-Kanäle (äquidistant) |
| PL_IOM | 8/16 kHz | Ladesignale (intern verwendet) |
| BUP | 768 kHz | Bittakt von B1/B2 für Senderichtung |
| BDN | 768 kHz | Bittakt von B1/B2 für Empfangsrichtung |
| UP_CLK | 768 kHz | Bittakt für Senderichtung |

Der Ablauf gemäß der vorliegenden Erfindung soll nunmehr anhand von verschiedenen Fallbeispielen näher erläutert werden:

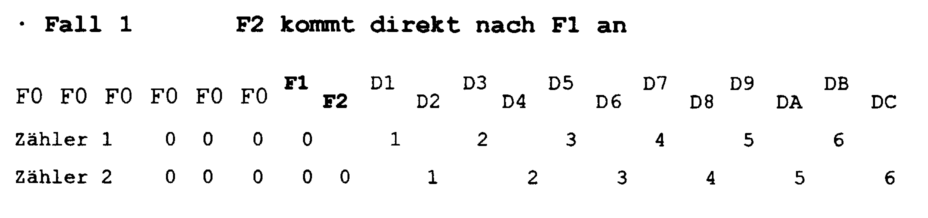

Zähler 1 startet mit F1. Es vergeht kein Zählschritt bis F2, das den zweiten Zähler startet. Somit stimmt der Datenstrom bereits und es muß nichts verschoben werden - die Daten können einfach durchgereicht werden.
F0 F0 F0 F0 F0 F0 **F1 F2** D1 D2 D3 D4 D5 D6 D7 D8 D9 DA DB DC

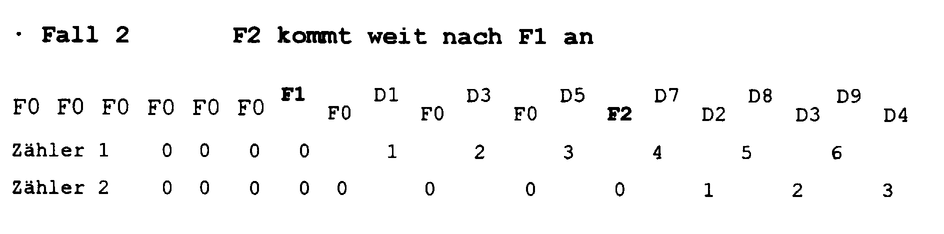

Zähler 1 startet mit F1. Es vergehen z.B. 3 Zählschritte bis F2 den zweiten Zähler startet. Somit muß F1 mit den Daten (D1, D3, ...) um 3 Bytes verschoben werden.

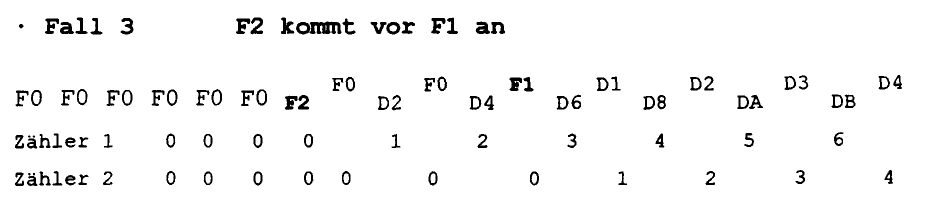

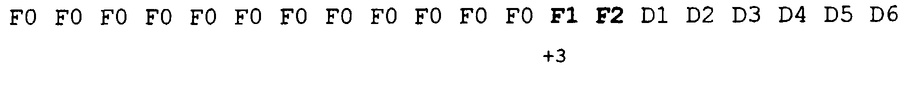

Zähler 1 startet mit F2. Es vergehen z.B. 2 Zählschritte bis F1 den zweiten Zähler startet. F2 muß hier aber um 3 Bytes verschoben werden, damit die Ordnung stimmt. Somit muß F2 (D2, D4, ...) um ein Byte zusätzlich zum Zählerstand verschoben werden.

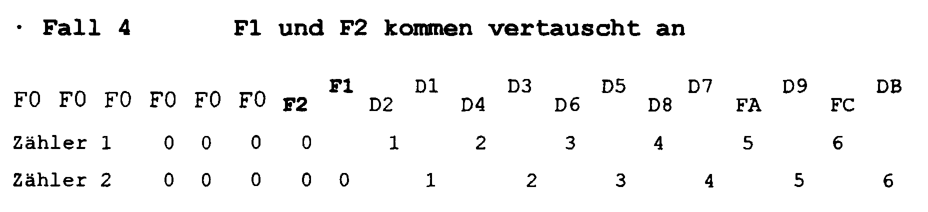

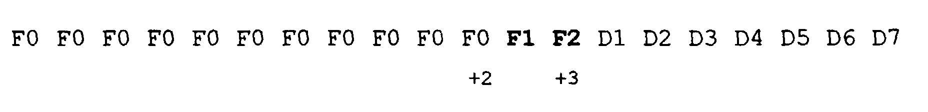

Zähler 1 startet mit F2. Es vergeht kein Zählschritt bis F1 den zweiten Zähler startet. F2 muß hier aber wieder wie im Fall 3 um 1 Byte zusätzlich verschoben werden.

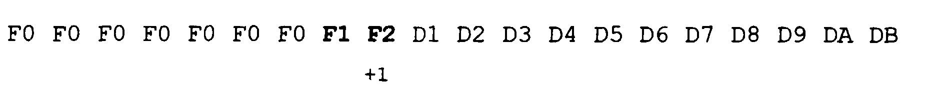

Die Technik gemäß der vorliegenden Erfindung ermöglicht somit eine Kompensation einer unterschiedlichen Laufzeit von beispielsweise 2 B-Kanälen des ISDN-Standards. Eine kurz Präambel bestehend aus einem Ruhe- und einem Startzeichen setzt über zwei Zähler die Speichertiefe eines FIFO-Speichers, da es den Laufzeitunterschied der Daten zwischen den beiden B-Kanälen empfängerseitig wieder ausgleicht. Der Hardwareaufwand kann auf ein Minimum beschränkt werden. Die effektive Bandbreite wird durch kein Protokoll geschmälert. Weiterhin ist prinzipiell keine Software zum Ausmessen des Laufzeitunterschieds und zum eigentlichen Betrieb notwendig. Da der vorgeschlagene Ablauf keiner bisherigen Norm entspricht, ist er nur für einen Sender mit gleicher Gegenstelle geeignet.

## Patentansprüche

1. Verfahren zum Laufzeitausgleich beim Empfang von Daten, die auf mehreren Pfaden in einer Multiplex-Technik übertragen werden,
wobei in jedem Pfad ein Startzeichen vor den Nutzdaten übertragen wird,
- Einschreiben (5) der Nutzdaten eines ersten Pfads, dessen Startzeichen zeitlich als erstes empfangen wird, in ein FIFO-Speicher (2),
- Start des Auslesens (6) der Nutzdaten des ersten Pfads aus dem FIFO-Speicher (2), sobald das Startzeichen eines weiteren Pfads empfangen wurde, und
- Unverzögertes Weiterleiten (9) der Nutzdaten des weiteren Pfads, dessen Startzeichen zeitlich nach dem Startzeichen des ersten Pfads empfangen wurde.

2. Verfahren nach Anspruch 1,
dadurch gekennzeichnet
daß die Startzeichen der mehreren Pfade jeweils eine Ordnungsnummer enthalten, die die Reihenfolge der Nutzdaten der mehreren Pfade für ein späteres Demultiplexen (7) anweist.

3. Verfahren nach Anspruch 1 oder 2,
dadurch gekennzeichnet
daß es weiterhin den Schritt des Demultiplexens (7) der Nutzdaten des ersten und des weiteren Pfads aufweist.

4. Verfahren nach einem der vorhergehenden Ansprüche,
dadurch gekennzeichnet,
daß vor der Übertragung der Startzeichen jeweils ein Ruhezeichen übertragen wird, bis sichergestellt ist, daß die Verbindung in sämtlichen Pfaden hergestellt wurde.

5. Verfahren nach einem der vorhergehenden Ansprüche,
dadurch gekennzeichnet,
daß der Laufzeitausgleich abgebrochen wird, sobald ein Überlauf (8) des FIFO-Speichers (2) festgestellt wird.

6. Verfahren nach einem der vorhergehenden Ansprüche,
dadurch gekennzeichnet,
daß die mehreren Pfade die beiden B-Kanäle des ISDN-Standards sind.

7. ISDN-Übertragungssystem,
das zur Bündelung der beiden B-Kanäle zu einem effektiven Nutzkanal konfiguriert ist, aufweisend
einen Sender aufweist, der in jedem der B-Kanäle vor der Übertragung der Nutzdaten ein Startzeichen aussendet, und
einen Empfänger, der für einen Laufzeitausgleich eine Steuereinheit (1) und ein FIFO-Speicher (2) aufweist,
wobei die Steuereinheit derart ausgelegt ist, daß die Nutzdaten des B-Kanals, dessen Startzeichen zeitlich als erstes empfangen wird, in das FIFO-Speicher (2) eingeschrieben (5) werden, das Auslesen (6) der Nutzdaten dieses B-Kanals aus dem FIFO-Speicher (2) gestartet wird, sobald das Startzeichen des anderen, zeitlich folgenden B-Kanals empfangen wurde, und die Nutzdaten des anderen B-Kanals unverzögert weitergeleitet (9) werden.

8. ISDN-Übertragungssystem nach Anspruch 7,
dadurch gekennzeichnet,
daß der Empfänger einen ersten und einen zweiten Zähler (3 bzw. 4) aufweist, die durch die Steuereinheit (1) zum Zeitpunkt des Empfangs des zeitlich ersten Startzeichens bzw. des Startzeichens des zeitlich folgenden B-Kanals gestartet werden, wobei der erste und der zweite Zähler (3 bzw. 4) eine Schreibzeigereinheit (5) bzw. eine Lesezeigereinheit (6) des FIFO-Speichers (2) steuern.

9. ISDN-Übertragungssystem nach einem der Ansprüche 7 oder 8,
dadurch gekennzeichnet,
daß die Startzeichen jeweils eine Ordnungsnummer enthalten und die beiden B-Kanäle nach dem Laufzeitausgleich einem Demultiplexer (7) derart zugeführt werden, daß die Ordnungsnummern der B-Kanäle beachtet wird.
